# EUROPEAN PATENT SPECIFICATION

(11) **EP 2 923 913 B1**
(45) Date of publication and mention of the grant of the patent: **21.11.2018**
(21) Application number: 15155719.6
(22) Date of filing: 19.02.2015
(51) Int. Cl.: B61L 3/00, B61L 27/00

(54) **Automatic train operation system**
Automatisiertes Zugbetriebssystem
Système de fonctionnement automatique d'un train

(30) Priority: 25.03.2014 JP 2014061289
(43) Date of publication of application: 30.09.2015
(73) Proprietor: Hitachi, Ltd., Tokyo (JP)
(72) Inventor: Maki, Kentaroh, Chiyoda-ku, Tokyo (JP); Miyauchi, Tsutomu, Chiyoda-ku, Tokyo (JP); Ohmura, Masafumi, Chiyoda-ku, Tokyo (JP)
(74) Representative: Gill, Stephen Charles

(56) References cited:
- EP-A1- 2 541 506
- WO-A1-2013/153659
- WO-A2-97/09217
- DE-A1-102011 078 449
- JP-A- 2010 061 321
- JP-A- 2010 228 688

## Description

### [Technical Field]

The present invention relates to an automatic train operation system, a train operation support system and a train operation management system, and can be suitably applied, for example, to train lines in which the train interval is not short and which have fluctuations in the flow of passengers into the station.

### [Background Art]

In recent years, in order to deal with various problems such as global environmental issues, resource depletion issues and issues related to the stable supply of electricity, further energy efficient methods are being demanded even in the railway field which boasts a relatively efficient energy utilization ratio. In response to the foregoing demand, in the railway field, it is known that energy saving of train operation is being sought by optimizing the speed pattern of train travel between stations.

Here, as a technology of optimizing the speed pattern of train travel between stations, Japanese Patent Application Publication No. H11-234813 (PTL 1) discloses a method of predicting the station departure time of the preceding train from the door opening time, the expected number of passengers who will deboard at the station and the station capacity, determining the door closing time from the result thereof, and thereby correcting the speed of the subsequent train. According to this technology, when the departure of the preceding train from the station departure is delayed, it is possible to inhibit unnecessary braking and re-acceleration caused by the subsequent train getting too close to the preceding train.

Moreover, in recent years, it is now possible to have a better sense of the flow of passengers who enter and exit the station pursuant to the popularization of IC card tickets, and flexible train operations that match the status of passengers are being proposed. For example, Japanese Patent Application Publication No. 2005-280637 (PTL 2) discloses a method where, when the congestion factor in the station is greater than a predetermined threshold and the congestion factor in the train that is approaching that station is relatively low, an instruction is sent to the approaching train to make a temporary stop at that station. According to this technology, it is possible to alleviate the congestion factor of a station that is overflowing with passengers due to an event or the like that is taking place nearby.

Moreover, Japanese Patent Application Publication No. 2005-212641 (PTL 3) discloses a method of counting the number of passengers at an automated ticket gate, estimating the number of passengers remaining in the station from the average arrival time required for passengers to reach the platform from the ticket gate of the station and the departure time of the respective trains, and using the estimated number of passengers remaining in the station for revising the timetable. According to this technology, it is possible to finely adjust the timetable of the respective trains upon statistically summarizing the number of passengers remaining in the station, and perform train operations with short waiting time and superior transport capacity.

EP 2541506 A proposes a method and system for managing a flow of passengers on a platform. WO 2013/153359 proposes a vehicle control system. WO 97/09217 proposes a control process for track-bound vehicles. DE 10 2011 078449 A proposes a method for performing track curve optimization for rail vehicles.

### [Summary of Invention]

### [Technical Problem]

Nevertheless, while PTL 1 describes "predicting the flow of passengers from the expected number of passengers who will deboard at the station and the station capacity", the foregoing information is merely used for determining the door closing time, and, for example, it is not possible to proactively optimize the door closing time (departure time) according to the flow of passengers.

Moreover, while PTL 2 discloses a method of causing the approaching train to stop at the stop station as needed simply in accordance with the congestion of passengers in the stop station, no consideration is given to the energy saving of the train operation.

Furthermore, while PTL 3 is able to obtain the estimation result of the number of passengers remaining in the station (output is number of passengers), since PTL 3 is not equipped with any means for interpreting the result thereof and adjusting the departure time, it is not possible to adjust the departure time in a direct manner and in real time.

The present invention was devised in view of the foregoing points, and an object of this invention is to propose an automatic train operation system, a train operation support system and a train operation management system capable of adjusting the departure timing of the controlled train and controlling the train operation in accordance with the fluctuations in the flow of passengers into the departure station of the controlled train.

### [Solution to Problem]

In order to achieve the foregoing object, the present invention provides an automatic train operation system for controlling an operation of a train according to claim 1.

### [Advantageous Effects of Invention]

According to the present invention, since the departure time of the controlled train is adjusted in accordance with the fluctuations in the flow of passengers into the departure station of the controlled train, it is possible to extend the time schedule between stations or reduce the number of passengers left behind depending on the situation, and thereby perform a train operation with superior energy saving performance, user-friendliness and punctuality.

### [Brief Description of Drawings]

[Fig. 1]

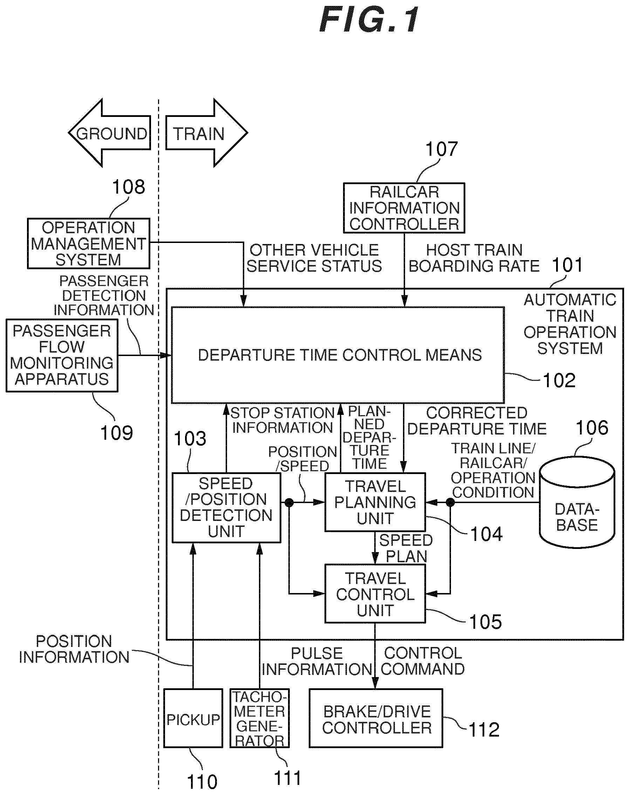

   Fig. 1 is a block diagram showing a configuration of the automatic train operation system according to the first embodiment of the present invention.
[Fig. 2]

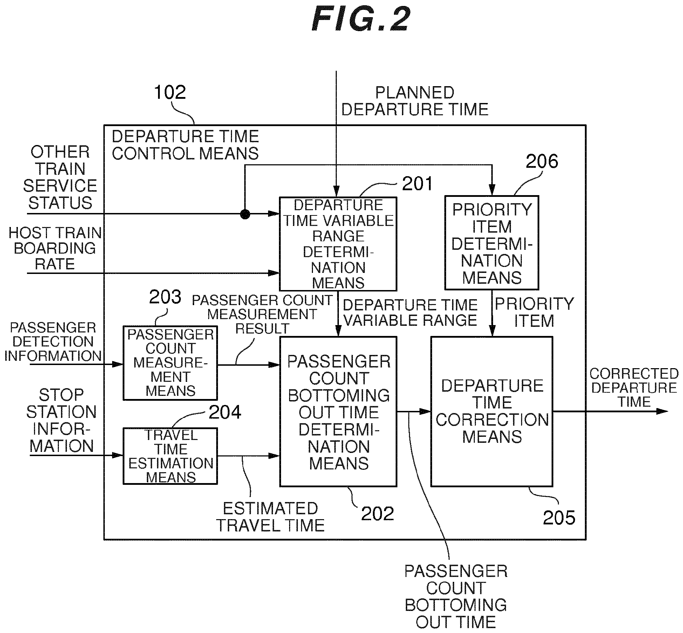

   Fig. 2 is a block diagram showing a configuration of the departure time control means according to the first embodiment.
[Fig. 3]
   Fig. 3 is a flowchart showing the details of the processing performed by the departure time control means according to the first embodiment.
[Fig. 4] of the controlled train is shown with an outlined triangle.

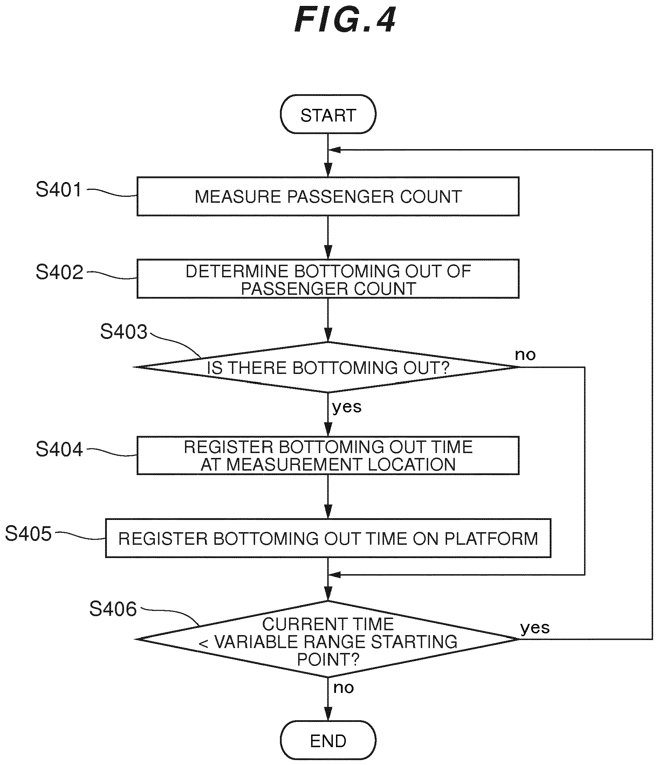

   Fig. 4 is a flowchart showing the determination/registration processing of the passenger count bottoming out time according to the first embodiment.
[Fig. 5]

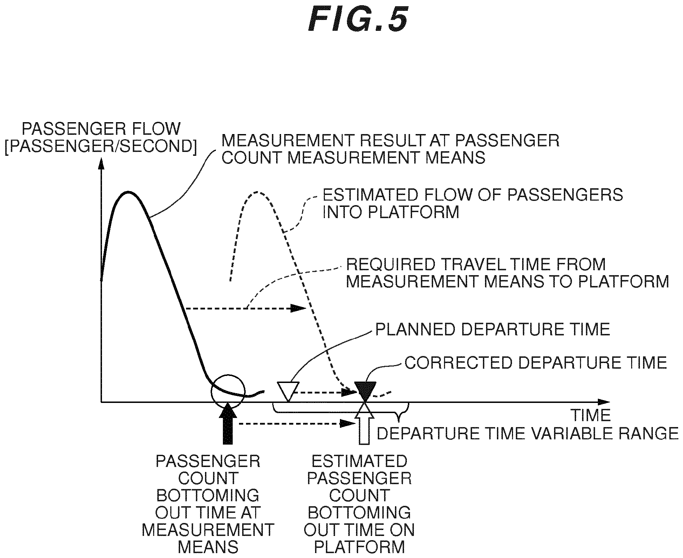

   Fig. 5 is a schematic diagram explaining a specific example of the departure time correction according to the first embodiment.
[Fig. 6]

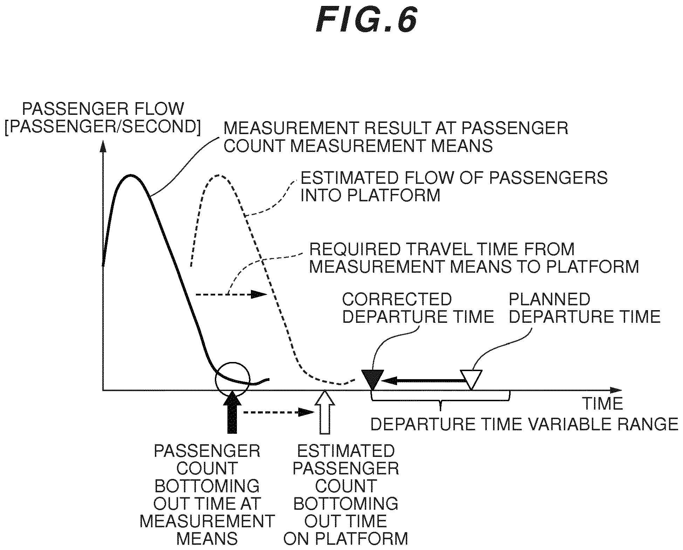

   Fig. 6 is a schematic diagram explaining a specific example of the departure time correction according to the first embodiment.
[Fig. 7]

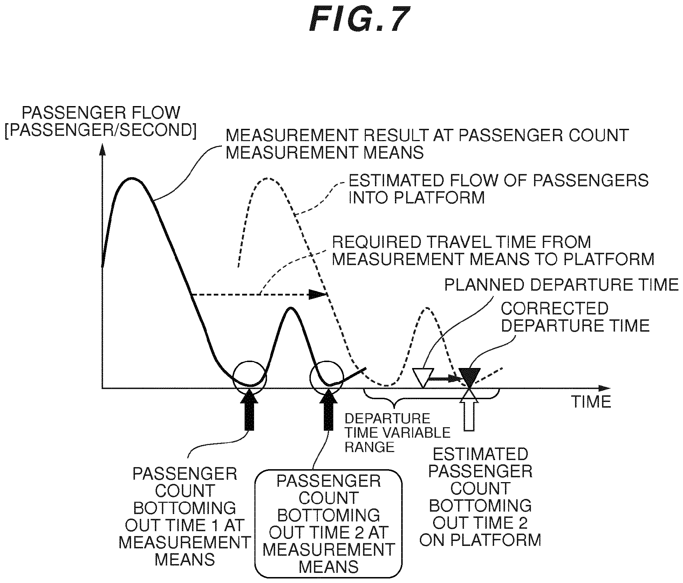

   Fig. 7 is a schematic diagram explaining a specific example of the departure time correction according to the first embodiment.
[Fig. 8]

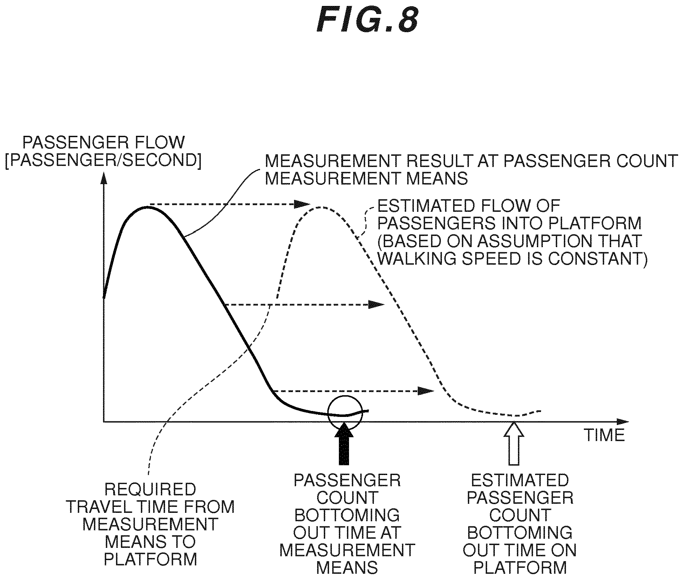

   Fig. 8 is a graph explaining the registration processing of the passenger count bottoming out time according to the first embodiment.
[Fig. 9]

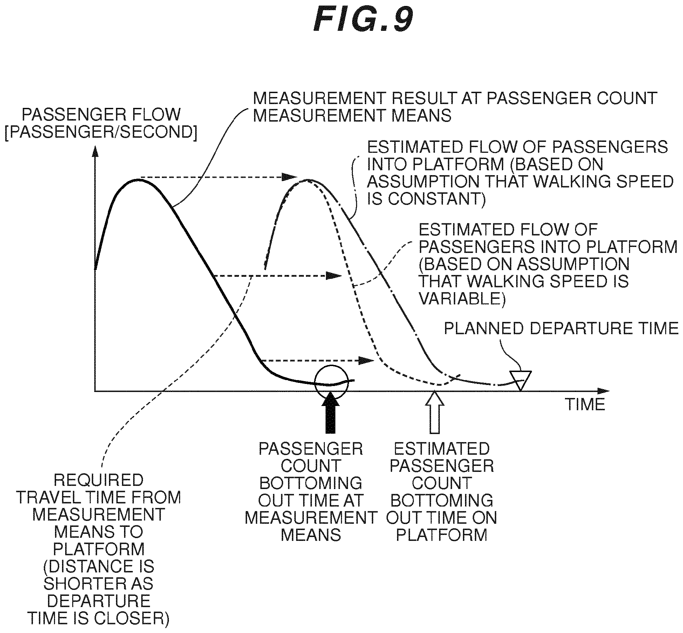

   Fig. 9 is a graph explaining the registration processing of the passenger count bottoming out time according to the first embodiment.
[Fig. 10]

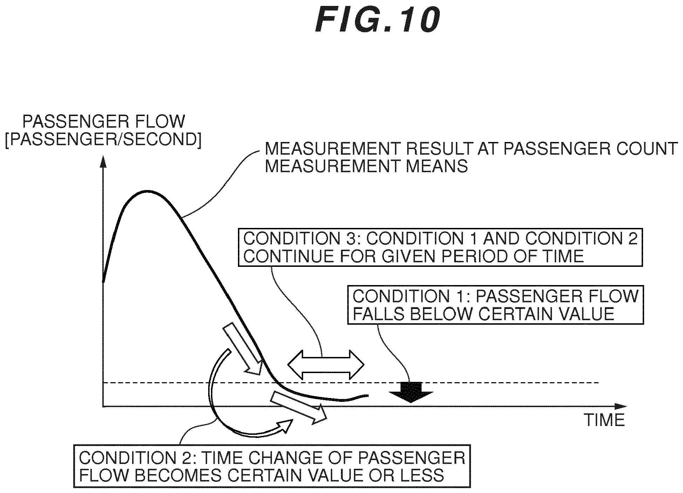

   Fig. 10 is a graph explaining the registration processing of the passenger count bottoming out time according to the first embodiment.
[Fig. 11]

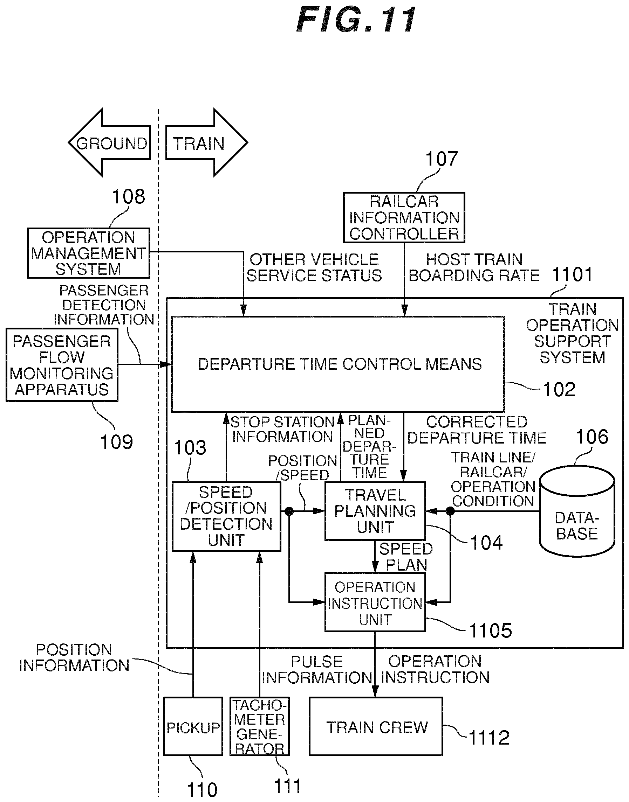

   Fig. 11 is a block diagram showing a configuration of the train operation support system according to first example, not belonging to the present invention.
[Fig. 12]

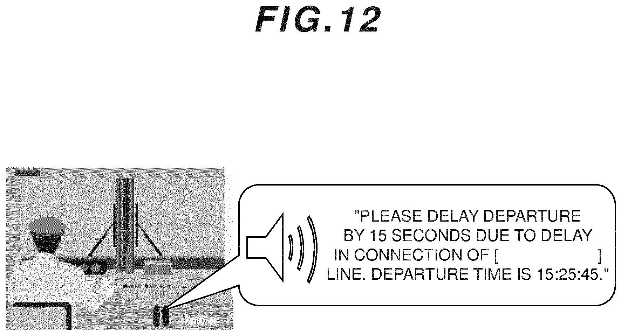

   Fig. 12 is a conceptual diagram showing an example of the departure timing instruction, based on audio, according to the first example.
[Fig. 13]

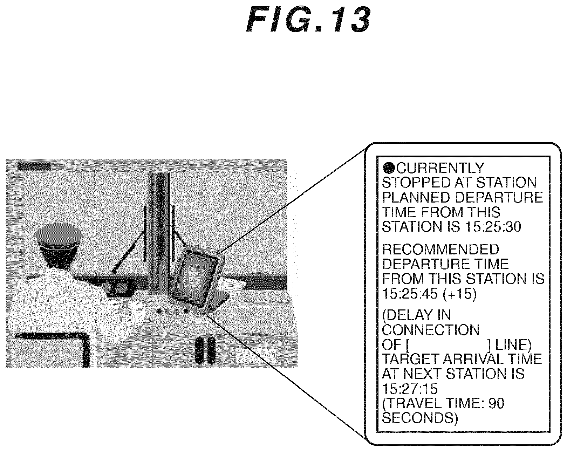

   Fig. 13 is a conceptual diagram showing an example of the departure timing instruction, based on screen display, according to the first example.
[Fig. 14]

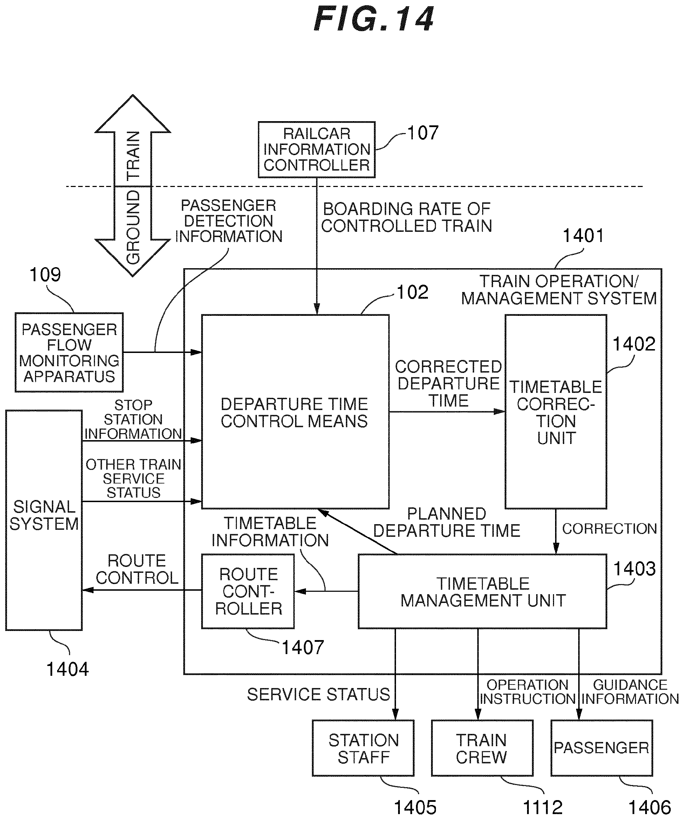

   Fig. 14 is a block diagram showing a configuration of the train operation management system according to a second example, not belonging to the present invention.

### [Description of Embodiments]

An embodiment of the present invention is now explained in detail with reference to the drawings.

### (1) First embodiment

### (1-1) Configuration of automatic train operation system

In the ensuing explanation, illustrated is an automatic train operation system for performing departure control in accordance with fluctuations in the flow of passengers into the station.

The configuration of an automatic train operation system 101 is foremost explained with reference to Fig. 1. The automatic train operation system 101 causes a travel planning unit 104 to create a travel plan based on the position and speed of a host train that are acquired with a speed/position detection unit 103, and the train line, rail car and service condition of the host train acquired from a database 106. In addition, the automatic train operation system 101 causes a travel control unit 105 to output a control command to a brake/drive controller 112 so that the host train will travel in accordance with the created travel plan. As an example of a travel plan, considered may be a speed pattern according to the position of the host train.

The speed/position detection unit 103 detects the speed based on a pulse signal, which is in synch with the wheel rotation, from a tachometer generator 111, and additionally detects the position of the train based on the position information from a pickup 110 which communicates with a track antenna beacon that is aware of the position in advance. For sections where a track antenna beacon is not available, the position information is obtained by integrating the speed.

Moreover, the automatic train operation system 101 includes departure time control means 102 described later, and the departure time control means 102 has the function of changing the previously planned travel plan and correcting the travel control contents by providing a corrected departure time to the travel planning unit 104. The departure time control means 102 acquires a planned departure time from the travel planning unit 104, acquires current stop station information from the speed/position detection unit 103, and corrects the planned departure time based on passenger detection information obtained from a passenger flow monitoring apparatus 109 in the stop station, service status of other trains obtained from an operation management system 108, and a boarding rate of the host train obtained from a railcar information controller 107 of the host train.

Note that, while Fig. 1 shows an example where the departure time control means 102 exists on the train side, a part or all of the means configuring the departure time control means 102 may also exist on the ground side.

### (1-2) Configuration of departure time control means

The configuration of the departure time control means 102 of the automatic train operation system 101 is now explained. In the ensuing explanation, the means configuring the departure time control means 102 and the information that is input/output between the respective means are described.

As shown in Fig. 2, the departure time control means 102 is configured from departure time variable range determination means 201, passenger count bottoming out time determination means 202, passenger count measurement means 203, travel time estimation means 204, departure time correction means 205 and priority item determination means 206.

The departure time variable range determination means 201 performs processing of acquiring the planned departure time from the travel planning unit 104, and setting a departure time variable range before and after the acquired planned departure time. The variable range of the departure time is set by referring to the boarding rate of the host train obtained from the railcar information controller 107 and the service status of other trains obtained from the operation management system 108 so that there will be no adverse effect on the operation of the host train and other trains. Processing performed by the departure time variable range determination means 201 will be described in detail later.

In order to determine a new departure time that is more appropriate, the passenger count bottoming out time determination means 202 determines the timing that the flow of passengers, who wish to board the controlled train, into the platform bottoms out within a range of the departure time variable range that is output from the departure time variable range determination means 201.

Here, the term "bottoming out" refers to the valley portion of the fluctuations in the inflow of passengers. The timing of bottoming out is determined by referring to the passenger count measurement result at the monitoring point of the passenger flow monitoring apparatus 109 obtained from the passenger count measurement means 203, and the estimated travel time from the monitoring point of the passenger flow monitoring apparatus 109 to the platform of the controlled train obtained from the travel time estimation means 204.

Moreover, the term "passenger count measurement result" refers to the amount of inflow of passengers per unit time, and the unit is, for example, "passenger/second". The foregoing monitoring point is located before the platform. As an example of a monitoring point, for instance, considered may be a ticket gate or the like. When the monitoring point is the ticket gate, data of "passenger/second" (passenger count measurement result) can be obtained from the entrance record (passenger detection information) of that ticket gate.

Moreover, whether a certain passenger that entered the ticket gate is a passenger who is heading toward a specific platform can be easily determined when that passenger is using a ticket with the destination recorded thereon or a commuter ticket. When it is not possible to determine whether a certain passenger who entered the ticket gate will head toward a specific platform, considered may be a method of counting the passengers who entered the ticket gate by stochastically sorting the platforms to be used by those passengers. The probability in the foregoing case will differ depending on the day of week or time period, and can be obtained from the field survey that is conducted in advance. Moreover, as another example of the monitoring point, considered may be the stairs or elevators heading to the platform, and the inflow of passengers can be monitored using monitor cameras and weight sensors installed at those locations.

The departure time correction means 205 sets the corrected departure time by using, as the input, the passenger count bottoming out time output from the passenger count bottoming out time determination means 202. When there are a plurality of passenger count bottoming out times, whether to reflect the passenger count bottoming out time, which is either earlier or later than the predetermined planned departure time among the plurality of passenger count bottoming out times, in the corrected departure time based on a priority item obtained from the priority item determination means 206 is determined.

Here, as an example of a priority item, considered may be "transport capacity", "energy saving" or the like. For example, under circumstances such as during rush hour when "transport capacity" should be given priority over "energy saving", operation of boarding more passengers on the controlled train can be performed and transport capacity can be given priority by reflecting a passenger bottoming out time, which is later than the planned departure time, in the corrected departure time. In the foregoing case, by delaying the departure time, "energy saving" is not given priority since the opportunity of performing an energy saving operation at a slower speed will be missed. The departure time correction means 205 sends the set corrected departure time to the travel planning unit 104.

The means configuring the departure time control means 102 and the information that is input/output between the respective means were described above.

### (1-3) Details of processing performed by departure time control means

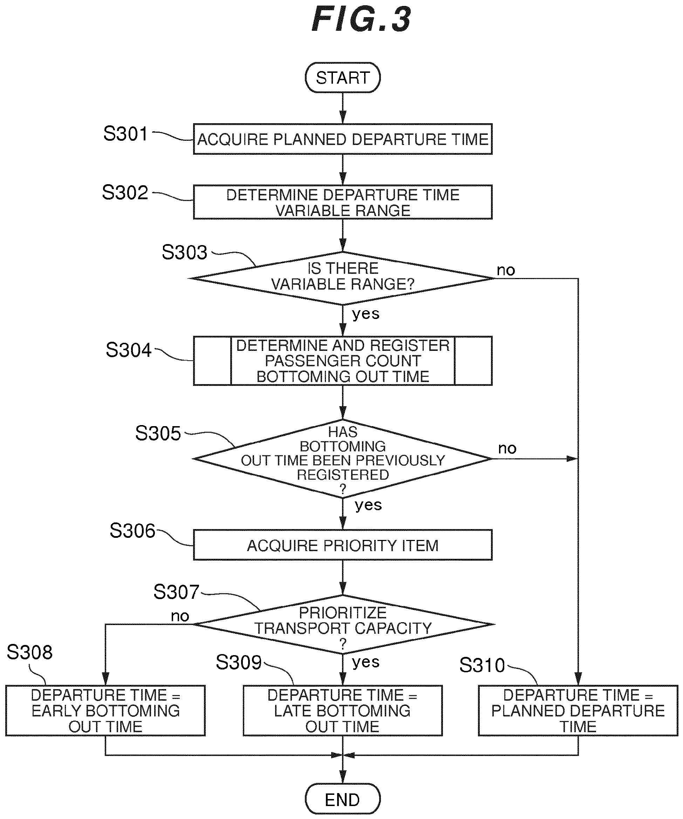

Details of the processing performed by the departure time control means 102 in this embodiment are now explained. Fig. 3 is a flowchart showing the details of the processing of the departure time control means 102. Note that the timing of starting this flow will be a time that is after the time obtained by subtracting the travel time from the monitoring point of the passenger flow monitoring apparatus 109 to the platform, which is measured by the passenger count measurement means 203, from the departure time of the preceding controlled train from the station.

As shown in Fig. 3, the departure time variable range determination means 201 foremost acquires the planned departure time from the travel planning unit 104 (S301).

Subsequently, the departure time variable range determination means 201 sets the departure time variable range before and after the planned departure time acquired in step S301 (S302). Specifically, the departure time variable range determination means 201 sets the departure time variable range by referring to the boarding rate of the host train obtained from the railcar information controller 107, and the service status of other trains obtained from the operation management system 108. The departure time variable range determination processing performed in step S302 will be described in detail later.

Next, the departure time variable range determination means 201 determines whether there is a departure time variable range based on the result of the departure time variable range determination in step S302 (S303). When it is determined that there is a departure time variable range in step S303, the processing of step S304 is executed. Meanwhile, when it is determined that there is no departure time variable range in step S303, the original planned departure time is overwritten and set as the departure time (S310).

In step S304, the passenger count bottoming out time determination means 202 of the departure time variable range determination means 201 determines and registers the passenger count bottoming out time. This processing requires, as the information to be input, the departure time variable range obtained from the departure time variable range determination means 201, the passenger count measurement result at the monitoring point of the passenger flow monitoring apparatus 109 obtained from the passenger count measurement means 203, and the estimated travel time from the monitoring point of the passenger flow monitoring apparatus 109 to the platform of the controlled train obtained from the travel time estimation means 204. The determination/registration processing of the passenger count bottoming out time in step S304 will be described in detail later.

Subsequently, the departure time variable range determination means 201 determines whether the passenger count bottoming out time has been registered based on the result of the determination/registration processing of the passenger count bottoming out time in step S304 (S305). When it is determined that the passenger count bottoming out time has been registered in step S305, the processing of step S306 is executed. Meanwhile, when it is determined that the passenger count bottoming out time has not been registered in step S305, the original planned departure time is overwritten and set as the departure time (S310).

In step S306, the departure time variable range determination means 201 acquires a priority item from the priority item determination means 206. As an example of a priority item, as described above, considered may be "transport capacity", "energy saving" or the like, and these two examples are illustrated in the ensuing explanation. Here, to give priority to "transport capacity" means adopting a departure time that is later than the planned departure time to enable more passengers to board the train at the current stop station. Moreover, to give priority to "energy saving" means adopting a departure time that is earlier than the planned departure time to lower the travel speed from the current station to the next station.

Subsequently, the departure time variable range determination means 201 executes the processing of step S309 when transport capacity is given priority and executes the processing of step S308 when transport capacity is not given priority; that is, when energy saving is given priority, based on the acquisition result of step S306. The terms "early" and "late" described in step S308 and step S309 are indexes for determining whether to choose an early departure time or a late departure time when a plurality of passenger bottoming out times exist. Accordingly, when there is only one passenger bottoming out time, the departure time that is set in step S308 and the departure time that is set in step S309 will be the same.

Details of the processing performed by the departure time control means 102 in this embodiment were explained above.

The departure time variable range setting performed in step S302 of Fig. 3 is now explained in detail.

As described above, the departure time variable range is set before and after the planned departure time. Normally, the planned departure time on the operation side is set in units of seconds such as 5-second intervals or 15-second intervals. Meanwhile, the departure time that is recognized by passengers based on a timetable or the like is set in units of minutes. Accordingly, from the perspective of passengers, it is unlikely that the passengers will acknowledge a train delay so as long as the unit of minutes is correct, and it is thereby possible to consider that the departure time can be corrected by several seconds to several ten seconds from the planned departure time. For example, when the planned departure time is "15:30:30", a variable range of the departure time exists, at maximum, from "15:30:00 to 15:30:59".

When there is some kind of factor that will limit the departure time variable range, a variable range of nearly 30 seconds before and after the departure time will not necessarily be available. As factors that may limit the departure time variable range, for example, considered may be the service status of other trains and the congestion rate of the host train.

As the service status of other trains, particular consideration should be given to the interference between the controlled train and the preceding train or the subsequent train. In other words, if the departure time is set to be too early, there is a possibility that the controlled train will get too close to the preceding train, and the controlled train may need to unnecessarily stop or decelerate between the stations. In the foregoing case, not only will the controlled train cause a delay and cause the punctuality to be lost, the controlled train will also use excess energy from the perspective of energy saving.

Contrarily, if the departure time is set to be too late, the approach of the subsequent train into the current stop station will be obstructed by the controlled train, and a delay in the subsequent train onward will arise. How many seconds the departure time may be corrected before interfering with the preceding train or the subsequent train can be calculated by acquiring information related to the timetable or the interval between track circuits.

With regard to the congestion rate of the host train, consideration needs to be given to cases where the congestion rate of the controlled train is high due to rush hour or nearby events. In the foregoing case, even if the departure time is delayed, it is anticipated that the number of passengers that can additionally board the train will be limited. Moreover, passengers who are currently boarding the train may become irritated because it is taking a rather long time for the passenger flowed train to depart. Accordingly, circumstances such as those described above that will result on reduced passenger satisfaction should be avoided.

The congestion rate of the host train can be determined from the boarding rate of the train. The boarding rate is generally calculated from the variable load in the air suspension of a railcar, and recognized by the railcar information controller 107. When the congestion rate of the host train is exceeding a predetermined congestion rate, it would be effective to limit the freedom in delaying the departure time in relation to the setting of the departure time variable range. The departure time variable range setting performed in step S302 was explained in detail above.

The determination and registration of the passenger count bottoming out time in step S304 of Fig. 3 are now explained with reference to Fig. 4.

As shown in Fig. 4, the passenger count measurement means 203 of the departure time control means 102 acquires the passenger detection information at the monitoring point of the passenger flow monitoring apparatus 109, and generates the passenger count measurement result at the respective times (S401). Here, the term "passenger count measurement result" refers to the amount of inflow of passengers per unit time, and the unit is, for example, "passenger/second".

Subsequently, the departure time control means 102 determines the passenger count bottoming out at the passenger measurement location based on the time change of the passenger count measurement result obtained in step S401 (S402). Determination of the passenger count bottoming out in step S402 will be described in detail later.

Subsequently, the departure time control means 102 determines whether the number of passengers has bottomed out according to the determination result of step S402 (S403). When it is determined that the number of passengers has bottomed out in step S403, the routine proceeds to the processing of step S404, and the time that the number of passengers bottomed out at the passenger measurement location is registered (S404). Meanwhile, when it is determined that the number of passengers has not bottomed out in step S403, the processing of step S406 is executed.

Subsequently, the departure time control means 102 calculates, and registers, the passenger count bottoming out time on the platform of the controlled train based on the bottoming out time at the passenger measurement location registered in step S404 (S405). The calculation method of the passenger count bottoming out time in step S405 will be described in detail later.

Subsequently, the departure time control means 102 compares the current time and the starting point time of the departure time variable range determined in step S302, returns to step S401 if the current time is before the starting point time, and ends the processing if the current time is after the starting point time.

The determination/registration processing of the passenger count bottoming out time in step S304 of Fig. 3 was described in detail above.

The method of determining the passenger count bottoming out in step S402 of Fig. 4 is now explained with reference to Fig. 10.

Fig. 10 is a graph representing an example of the time change of the amount of inflow of passengers per unit time, wherein the horizontal axis shows the time and the vertical axis shows the passenger flow (unit is "passenger/second"). The black solid line of Fig. 10 represents the passenger count measurement result of the passenger count measurement means 203.

As an example of the criterion for determining the passenger count bottoming out in step S402 of Fig. 3, considered may be a case where the passenger flow falls below a certain value (condition 1). As another example, in addition to condition 1 of Fig. 10, considered may be a case where the time change of the passenger flow becomes a certain value or less (condition 2). In addition, a case where condition 1 and condition 2 continue for a given period of time (condition 3) may also be considered as an example of the criterion.

Since the threshold in these conditions will differ depending on the station, inbound/outbound operation, or time period, it would be desirable to conduct a field survey for deciding the threshold values upon operating the train. Moreover, the criteria described above are merely examples, and the passenger count bottoming out may also be determined based on other criterion.

The method of determining the passenger count bottoming out in step S402 of Fig. 4 was described in detail above.

A processing example of registering the bottoming out time on the platform in step S405 of Fig. 4 is now explained with reference to Fig. 8 and Fig. 9. Fig. 8 and Fig. 9 differ based on whether the walking speed of passengers from the location of the passenger measurement means to the platform of the controlled train will change depending on the time. Both Fig. 8 and Fig. 9 are graphs representing an example of the time change of the amount of inflow of passengers per unit time, wherein the horizontal axis shows the time and the vertical axis shows the passenger flow (unit is "passenger/second"). Moreover, the black solid line represents the measurement result of the passenger count measurement means 203.

Fig. 8 shows an example where the walking speed of passengers is assumed to be fixed regardless of the time. Thus, the graph (dotted line) showing the flow of passengers into the platform is a parallel displacement of the graph (solid line) showing the measurement result of the passenger measurement means in the advancing direction of time. The amount of parallel displacement of the graph is the required travel time that is required for a passenger to travel from the location of the measurement means to the platform.

Accordingly, the estimated passenger count bottoming out time on the platform is the time in which a given required travel time is delayed from the passenger bottoming out time at the location of the measurement means. The required travel time may be calculated by dividing the distance from the location of the measurement means to the platform by the average walking speed, or otherwise calculated statistically based on a field survey. Moreover, since the required travel time may change depending on the day of week, time period, congestion rate of the station or other factors, a more accurate required travel time can be used and a more appropriate departure time can be set by using a detailed database in which the foregoing factors are used as indexes.

Fig. 9 shows an example where the walking speed of passengers is assumed to be different depending on the time. Generally speaking, passengers who arrive at the station at a time that is close to the planned departure time of the train to be boarded are considered to hurry to the platform in comparison to passengers who arrive at the station with plenty of spare time before the planned departure time. Accordingly, it is possible to assume that the walking speed of passengers will be faster as the measured time of the passenger count measurement means is closer to the planned departure time of the controlled train.

Based on the foregoing assumption, the graph (dotted line) showing the flow of passengers into the platform is not a parallel displacement of the graph (solid line) showing the measurement result of the passenger measurement means in the advancing direction of time, and becomes a shape (dashed line) that collapses in the time direction. In the foregoing case, the estimated passenger count bottoming out time on the platform becomes the time in which the required travel time according to the time is delayed from the passenger bottoming out time at the location of the measurement means. The relation between the remaining time up to the planned departure time and the walking speed can be statistically calculated from field surveys and experiments.

When the relation between the remaining time up to the planned departure time and the walking speed can be obtained as described above, a more accurate passenger bottoming out time on the platform can be determined by registering the bottoming out time on the platform according to the method of Fig. 9 rather than determining the bottoming out time by subjecting the graph to parallel displacement as shown in Fig. 8.

A processing example of registering the bottoming out time on the platform in step S405 of Fig. 4 was explained above.

A specific example of the departure time correction that is realized with the foregoing configuration is now explained with reference to Fig. 5 to Fig. 7.

Fig. 5 shows an example where the corrected departure time becomes later than the planned departure time, Fig. 6 shows an example where the corrected departure time becomes earlier than the planned departure time, and Fig. 7 shows an example in which there are a plurality of passenger count bottoming out times. All diagrams are graphs representing an example of the time change of the amount of inflow of passengers per unit time, wherein the horizontal axis shows the time and the vertical axis shows the passenger flow (unit is "passenger/second"). Moreover, the solid line represents the measurement result of the passenger count measurement means 203, and the dotted line represents the estimated flow of passengers into the platform. Note that the required travel time from the location of the measurement means to the platform is assumed to be constant irrespective of the time.

In Fig. 5, the passenger count bottoming out time at the measurement means exists at the time shown with a black arrow. In consideration of the required travel time from the measurement means to the platform, the estimated passenger count bottoming out time on the platform becomes the time shown with an outlined arrow. Meanwhile, let it be assumed that the departure time variable range is extending rearward at the time that the planned departure time

In the foregoing case, since the estimated passenger count bottoming out time on the platform (outlined arrow) is a time that is later than the planned departure time and falls within the departure time variable range, the corrected departure time (black triangle) is set to be a time that is close to the estimated passenger count bottoming out time on the platform (outlined arrow). Note that the setting of the corrected departure time (black triangle) does not need to be the same as the estimated passenger count bottoming out time on the platform (outlined arrow), and may also be set to a time that is close to the estimated passenger count bottoming out time on the platform (outlined arrow) to match the timetable interval (5-second interval, 15-second interval, etc.) that is generally used in train lines.

Moreover, in Fig. 6, the passenger count bottoming out time at the measurement means exists at the time shown with a black arrow. In consideration of the required travel time from the measurement means to the platform, the estimated passenger count bottoming out time on the platform becomes the time shown with an outlined arrow. Meanwhile, the planned departure time of the controlled train is at the time shown with an outlined triangle, and the departure time variable range exists before and after the foregoing planned departure time of the controlled train.

In the foregoing case, since the estimated passenger count bottoming out time on the platform (outlined arrow) is a time that is earlier than the planned departure time and exists before the starting point of the departure time variable range, the corrected departure time (black triangle) is set at a time that is close to the estimated passenger count bottoming out time on the platform (outlined arrow) and within a range that falls within the departure time variable range. Note that the setting of the corrected departure time (black triangle) does not need to be the same as the starting point of the departure time variable range, and is set to a time that is close to the estimated passenger count bottoming out time on the platform (outlined arrow) to match the timetable interval (5-second interval, 15-second interval, etc.) that is generally used in train lines.

Moreover, in Fig. 7, the passenger count bottoming out time at the measurement means exists at the two times shown with a black arrow. Here, on the assumption that the priority item in step S306 was "transport capacity", the later passenger count bottoming out time at the measurement means is adopted. The estimated passenger count bottoming out time at the corresponding platform becomes the time shown with an outlined arrow. Meanwhile, the planned departure time of the controlled train is the time shown with an outlined triangle, and the departure time variable range exists before and after the foregoing planned departure time of the controlled train.

In the foregoing case, since the estimated passenger count bottoming out time on the platform (outlined arrow) is a time that is later than the planned departure time and falls within the departure time variable range, the corrected departure time (black triangle) is set to a time that is close to the estimated passenger count bottoming out time on the platform (outlined arrow). Note that the setting of the corrected departure time (black triangle) does not need to be the same as the estimated passenger count bottoming out time on the platform (outlined arrow), and may also be set to a time that is close to the estimated passenger count bottoming out time on the platform (outlined arrow) to match the timetable interval (5-second interval, 15-second interval, etc.) that is generally used in train lines.

A specific example of the departure time correction that is realized with the configuration of this embodiment was explained above.

### (2) First example, not belonging to the invention

### (2-1) Configuration of train operation support system

This example explains an example of a train operation support system for instructing the operator of the departure time according to the fluctuations in the flow of passengers into the station. The present example can also be applied to manually operated trains that do not comprise an automatic train operation device.

As shown in Fig. 11, the train operation support system 1101 causes the travel planning unit 104 to create a travel plan based on the position and speed of the host train acquired with the speed/position detection unit 103, and the train line, railcar and service condition acquired from the database 106, and causes an operation instruction unit 1105 to output operation instructions, based on screen display or audio, to a train crew 1112 so that the train is operated in accordance with the created travel plan.

As an example of a travel plan, considered may be a speed pattern according to the position of the host train. The speed/position detection unit 103 detects the speed based on a pulse signal, which is in synch with the wheel rotation, from a tachometer generator 111, and additionally detects the position of the train based on the position information from a pickup 110 which communicates with a track antenna beacon that is aware of the position in advance. For sections where a track antenna beacon is not available, the position information is obtained by integrating the speed.

Moreover, the train operation support system 1101 includes departure time control means 102 described later, and the departure time control means 102 has the function of changing the previously planned travel plan and correcting the travel control contents by providing a corrected departure time to the travel planning unit. The departure time control means 102 acquires a planned departure time from the travel planning unit 104, acquires current stop station information from the speed/position detection unit 103, and corrects the planned departure time based on passenger detection information obtained from a passenger flow monitoring apparatus 109 in the stop station, service status of other trains obtained from an operation management system 108, and a boarding rate of the host train obtained from a railcar information controller 107 of the host train.

Note that, while Fig. 11 shows an example where the departure time control means 102 exists on the train side, a part or all of the means configuring the departure time control means 102 may also exist on the ground side.

Since the configuration, I/O and processing for determining the departure time regarding the departure time control means 102 of Fig. 11 are the same as those explained with reference to Fig. 2 to Fig. 10 in the first embodiment, the detailed explanation thereof is omitted.

Examples of instructions output by the operation instruction unit 1105 are now explained with reference to Fig. 12 and Fig. 13.

Fig. 12 shows an example of instructing the departure time based on audio. Information relating to the departure time of the host train is provided from a speaker provided within the operator's cab. Here, the correction level from the original planned departure time and the new departure time as the correction result are desirably instructed. Moreover, by additionally instructing the operation of the time change in the travel time to the next station resulting from the correction of the departure time, it is possible to provide related information regarding how the operation needs to be changed. In addition, it is also possible to provide specific information such as the maximum speed to be reached regarding how the operation to the next station will change.

Moreover, Fig. 13 shows an example of instructing the departure timing based on screen display. Information relating to the departure timing of the host train is provided to the screen of a control platform or an additionally installed display or the like. Here, the correction level from the original planned departure time and the new departure time as the correction result are desirably instructed. Moreover, by additionally instructing the operation of the time change in the travel time to the next station resulting from the correction of the departure time, it is possible to provide related information regarding how the operation needs to be changed. In addition, it is also possible to provide specific information such as the maximum speed to be reached regarding how the operation to the next station will change.

In the actual operation, an even more effective operation support system can be realized by combining both the instruction based on audio illustrated in Fig. 12 and the instruction based on screen display illustrated in Fig. 13. An example of the train operation support system according to this embodiment was explained above.

### (3) Second example, not belonging to the invention

### (3-1) Configuration of train operation management system

This second example explains an example of a train operation management system for correcting the route control contents according to the fluctuations in the flow of passengers into the station. The present example can be applied to all types of trains without having to equip the railcar with a special device.

As shown in Fig. 14, the train operation management system 1401 causes a timetable correction unit 1402 to correct and update the timetable information, which is managed by a timetable management unit 1403, based on the corrected departure time that is output from the departure time control means 102 described later. Here, the timetable information is communicated to station staff 1405, train crews 1112 or passengers 1406 in an appropriate format, respectively. Moreover, the timetable information is also utilized for the route control in a signal system 1404 through a route controller 1407.

The departure time control means 102 acquires a planned departure time from the timetable management unit 1403, acquires current stop station information from the signal system 1404, and corrects the planned departure time based on passenger detection information obtained from a passenger flow monitoring apparatus 109 in the stop station, service status of other trains obtained from the signal system 1404, and a boarding rate of the controlled train obtained from a railcar information controller 107 of the controlled train.

Since the configuration, I/O and processing for determining the departure time regarding the departure time control means 102 of Fig. 14 are the same as those explained with reference to Fig. 2 to Fig. 10 in the first embodiment, the detailed explanation thereof is omitted. An example of the train operation management system according to this example was described above.

Note that the present invention can be applied, for example, as an automatic train operation system, a train operation support system and a train operation management system of train lines in which the train interval is not short and which have fluctuations in the flow of passengers into the station.

### [Reference Signs List]

101 automatic train operation system
102 departure time control means
103 speed/position detection unit
104 travel planning unit
105 travel control unit
106 database
107 railcar information controller
108 operation management system
109 passenger flow monitoring apparatus
110 pickup
111 tachometer generator
112 brake/drive controller
201 departure time variable range determination means
202 passenger count bottoming out time determination means
203 passenger count measurement means
204 travel time estimation means
205 departure time correction means
206 priority item determination means

## Claims

1. An automatic train operation system (101) for controlling an operation of a train,
wherein, based on a predetermined planned departure time of a controlled train and inflow detection information of station users at a predetermined measurement point, the planned departure time of the controlled train is corrected; the system comprising:
departure time variable range determination means (201) for determining a departure time variable range in which a departure time can be corrected to be before or after the planned departure time;
passenger count measurement means (203) for measuring a number of passengers heading toward a platform of the controlled train at a measurement point located before the platform of the controlled train;
travel time estimation means (204) for estimating a required travel time which is required for traveling from the measurement point to the platform;
passenger count bottoming out time determination means (202) for determining a time that the number of people who flow into the platform per unit time bottoms out within the determined departure time variable range or before the starting point of the determined departure time variable range, based on a measurement result of the passenger count measurement means and the required travel time; and
departure time correction means (205) for correcting the departure time according to a comparative result of the bottoming out time and the planned departure time of the train so that the departure time is close to the bottoming out time and within the departure time variable range.

2. The automatic train operation system according to claim 1,
wherein the passenger count measurement means counts a number of passengers flowing into a specific platform based on entrance data of an automated ticket gate.

3. The automatic train operation system according to claim 1,
wherein the passenger count measurement means calculates a number of passengers flowing into a specific platform based on a passenger distribution ratio in every direction that is compiled as a database for each day of week or time period when a destination of a passenger who entered a station is unclear.

4. The automatic train operation system according to any one of the previous claims,
wherein the travel time estimation means estimates that passengers who passed the measurement point at a timing that is closer to the planned departure time of the controlled train will travel from the measurement point to the platform at a shorter travel time.

5. The automatic train operation system according to any one of the previous claims,
wherein the departure time variable range determination means determines the departure time variable range in which the departure time can be corrected based on one among the planned departure time of the controlled train, service status of other trains, and congestion rate of the controlled train, or based on any combination thereof.

6. The automatic train operation system according to any one of the previous claims, further comprising:
a travel planning unit (104) for creating a travel plan based on a position, a speed, a train line, a railcar and a service condition of the controlled train; and
a travel control unit (105) for controlling the controlled train so that the controlled train travels according to the travel plan,
wherein the travel planning unit reflects the corrected departure time in the travel plan.

7. The automatic train operation system according to any one of the previous claims,
wherein, when there are a plurality of candidates of a corrected departure time that are generated by correcting the planned departure time, the departure time correction means selects, based on priority information which is separately input for prioritizing either energy saving or transport capacity, a departure time that is earlier among the plurality of corrected departure time candidates for the priority information which prioritizes energy saving than the priority information which prioritizes transport capacity.

## Patentansprüche

1. Automatisches Zugbetriebssystem (101) zum Steuern eines Betriebs eines Zugs, wobei die geplante Abfahrtszeit des gesteuerten Zugs auf Basis einer vorbestimmten, geplanten Abfahrtszeit eines gesteuerten Zugs und von Zustromermittlungsinformationen von Bahnhofsbenutzern an einem vorbestimmten Messpunkt korrigiert wird, wobei das System Folgendes umfasst:
ein Mittel zur Bestimmung eines variablen Abfahrtszeitbereichs (201) zum Bestimmen eines variablen Abfahrtszeitbereichs, in dem eine Abfahrtszeit korrigiert werden kann, um vor oder nach der geplanten Abfahrtszeit zu sein;
ein Mittel zur Messung der Passagierzahl (203), um eine Anzahl von Passagieren, die sich zu einem Bahnsteig des gesteuerten Zugs bewegen, an einem Messpunkt zu messen, der sich vor dem Bahnsteig des gesteuerten Zugs befindet;
ein Mittel zur Schätzung der Gehzeit (204), um eine erforderliche Gehzeit zu schätzen, die zum Gehen vom Messpunkt zum Bahnsteig erforderlich ist;
ein Mittel zur Bestimmung der Abflachungszeit der Passagierzahl (202), um auf Basis eines Messergebnisses des Mittels zur Messung der Passagierzahl und der erforderlichen Gehzeit eine Zeit zu bestimmen, in der die Anzahl von Menschen, die pro Zeiteinheit auf den Bahnsteig strömen, innerhalb des bestimmten variablen Abfahrtszeitbereichs oder vor dem Startpunkt des bestimmten variablen Abfahrtszeitbereichs abflacht; und
Mittel zur Korrektur der Abfahrtszeit (205), um die Abfahrtszeit gemäß eines Vergleichsergebnisses aus der Abflachungszeit und der geplanten Abfahrtszeit des Zugs zu korrigieren, sodass die Abfahrtszeit nahe an der Abflachungszeit und innerhalb des variablen Abfahrtszeitbereichs ist.

2. Automatisches Zugbetriebssystem nach Anspruch 1, wobei das Mittel zur Messung der Passagierzahl auf Basis von Eintrittsdaten einer automatischen Fahrkartenkontrollstelle eine Anzahl von Passagieren zählt, die auf einen spezifischen Bahnsteig strömen.

3. Automatisches Zugbetriebssystem nach Anspruch 1, wobei das Mittel zur Messung der Passagierzahl auf Basis eines Passagierverteilungsverhältnisses in jeder Richtung, das als Datenbank für jeden Wochentag oder jeden Zeitraum erstellt wird, wenn ein Ziel eines Passagiers, der einen Bahnhof betreten hat, unklar ist, eine Anzahl von Passagieren berechnet, die an einen spezifischen Bahnsteig strömen.

4. Automatisches Zugbetriebssystem nach einem der vorangegangenen Ansprüche, wobei das Mittel zur Schätzung der Gehzeit schätzt, dass Passagiere, die den Messpunkt zu einem Zeitpunkt passieren, der näher an der geplanten Abfahrtszeit des gesteuerten Zugs liegt, in einer kürzeren Gehzeit vom Messpunkt zum Bahnsteig gehen wird.

5. Automatisches Zugbetriebssystem nach einem der vorangegangenen Ansprüche, wobei das Mittel zur Bestimmung eines variablen Abfahrtszeitbereichs auf Basis von einem aus der geplanten Abfahrtszeit des gesteuerten Zugs, des Betriebszustands anderer Züge und der Überlastungsrate des gesteuerten Zugs oder einer Kombination davon den variablen Abfahrtszeitbereich bestimmt, in dem die Abfahrtszeit korrigiert werden kann.

6. Automatisches Zugbetriebssystem nach einem der vorangegangenen Ansprüche, ferner umfassend:
eine Reiseplanungseinheit (104) zum Erstellen eines Reiseplans auf Basis einer Position, einer Geschwindigkeit, einer Zuglinie, eines Schienenfahrzeugs und einer Betriebsbedingung des gesteuerten Zugs; und
eine Reisesteuereinheit (105), um den gesteuerten Zug so zu steuern, dass der gesteuerte Zug gemäß dem Reiseplan reist,
wobei die Reiseplanungseinheit die korrigierte Abfahrtszeit im Reiseplan berücksichtigt.

7. Automatisches Zugbetriebssystem nach einem der vorangegangenen Ansprüche, wobei, wenn es eine Vielzahl von Möglichkeiten für eine korrigierte Abfahrtszeit gibt, die durch das Korrigieren der geplanten Abfahrtszeit erzeugt werden, wählt das Mittel zur Korrektur der Abfahrtszeit auf Basis von separat eingegebenen Prioritätsinformationen, um entweder das Sparen von Energie oder die Beförderungskapazität zu priorisieren, eine Abfahrtszeit aus, die für die Prioritätsinformationen, die das Sparen von Energie priorisieren, unter der Vielzahl von korrigierten Abfahrtszeitmöglichkeiten früher ist als die Prioritätsinformationen, die die Beförderungskapazität priorisieren.

## Revendications

1. Système d'exploitation automatique de train (101) pour commander l'exploitation d'un train,
dans lequel, sur la base d'un instant de départ planifié prédéterminé d'un train commandé et d'informations de détection de flux entrant d'utilisateurs de station à un point de mesure prédéterminé, l'instant de départ planifié du train commandé est corrigé ; le système comprenant :
des moyens de détermination de plage variable d'instant de départ (201) pour déterminer une plage variable d'instant de départ dans laquelle un instant de départ peut être corrigé avant ou après l'instant de départ prévu ;
des moyens de mesure de décompte de passagers (203) pour mesurer un nombre de passagers se dirigeant vers une plate-forme du train commandé à un point de mesure situé avant la plate-forme du train commandé ;
des moyens d'estimation du temps de déplacement (204) pour estimer un temps de déplacement requis qui est requis pour se déplacer du point de mesure à la plate-forme ;
des moyens de détermination d'instant d'atteinte de décompte de passagers (202) pour déterminer un instant au niveau duquel le nombre de personnes entrant dans la plate-forme par unité de temps atteint la plage variable d'instant de départ déterminée ou avant le point de départ de la plage variable d'instant de départ déterminée, sur la base d'un résultat de mesure des moyens de mesure de décompte de passagers et du temps de déplacement requis ; et
des moyens de correction d'instant de départ (205) pour corriger l'instant de départ en fonction d'un résultat comparatif de l'instant d'atteinte et de l'instant de départ planifié du train, de sorte que l'instant de départ soit proche du temps d'atteinte et dans la plage variable d'instant de départ.

2. Système d'exploitation automatique de train selon la revendication 1,
dans lequel les moyens de mesure de décompte de passagers comptent un nombre de passagers circulant dans une plate-forme spécifique sur la base de données d'entrée d'une porte de contrôle de billet automatisée.

3. Système d'exploitation automatique de train selon la revendication 1,
dans lequel les moyens de mesure de décompte de passagers calculent un nombre de passagers circulant dans une plate-forme spécifique sur la base d'un rapport de répartition de passagers dans chaque direction qui est compilé sous la forme d'une base de données pour chaque jour de la semaine ou chaque période de temps lorsqu'une destination d'un passager qui est entré dans une station n'est pas claire.

4. Système d'exploitation automatique de train selon l'une quelconque des revendications précédentes,
dans lequel les moyens d'estimation de temps de déplacement estiment que les passagers qui ont passé le point de mesure à un cadencement qui est plus proche de l'instant de départ planifié du train commandé vont se déplacer à partir du point de mesure jusqu'à la plate-forme à un temps de déplacement plus court.

5. Système d'exploitation automatique de train selon l'une quelconque des revendications précédentes,
dans lequel les moyens de détermination de plage variable d'instant de départ déterminent la plage variable d'instant de départ dans laquelle l'instant de départ peut être corrigée sur la base d'un parmi l'instant de départ planifié du train commandé, l'état de service d'autres trains et du taux d'encombrement du train commandé, ou sur la base de toute combinaison de ceux-ci.

6. Système d'exploitation automatique de train selon l'une quelconque des revendications précédentes, comprenant en outre :
une unité de planification de déplacement (104) pour créer un plan de déplacement sur la base d'une position, d'une vitesse, d'une ligne de train, un wagon et une condition de service du train commandé ; et
une unité de commande de déplacement (105) pour commander le train commandé de sorte que le train commandé se déplace conformément au plan de déplacement,
dans lequel l'unité de planification de déplacement réfléchit l'instant de départ corrigé dans le plan de déplacement.

7. Système d'exploitation automatique de train selon l'une quelconque des revendications précédentes,
dans lequel, lorsqu'il existe une pluralité de candidats d'un instant de départ corrigé qui sont générés en corrigeant l'instant de départ planifié, les moyens de correction d'instant de départ sélectionnent, sur la base d'informations de priorité qui sont entrées séparément pour donner priorité l'économie d'énergie ou la capacité de transport, un instant de départ qui est plus tôt parmi la pluralité de candidats d'instant de départ corrigée pour l'information de priorité qui donne la priorité à l'économie d'énergie par rapport l'information de priorité qui donne la priorité à la capacité de transport.
